# EUROPÄISCHE PATENTSCHRIFT

(11) **EP 3 685 904 B1**
(45) Veröffentlichungstag und Bekanntmachung des Hinweises auf die Patenterteilung: **08.11.2023**
(21) Anmeldenummer: 19153598.8
(22) Anmeldetag: 24.01.2019
(51) Int. Cl.: B01D 53/14, C01B 32/50

(54) **VERFAHREN UND ANLAGE ZUR ABTRENNUNG VON KOHLENDIOXID AUS DER LUFT**
METHOD AND ASSEMBLY FOR THE SEPARATION OF CARBON DIOXIDE FROM AIR
PROCÉDÉ ET INSTALLATION DESTINÉS À LA SÉPARATION DU DIOXYDE DE CARBONE DE L'AIR

(43) Veröffentlichungstag der Anmeldung: 29.07.2020
(73) Patentinhaber: Axiom Angewandte Prozeßtechnik Ges. m.b.H., 2483 Ebreichsdorf (AT); Makaruk, Aleksander, 1050 Wien (AT)
(72) Erfinder: MAKARUK, Aleksander, 1050 Wien (AT); SZIVACZ, Johannes, 2483 Weigelsdorf (AT)
(74) Vertreter: Ellmeyer, Wolfgang

(56) Entgegenhaltungen:
- DE-A1- 4 235 125
- US-A- 4 251 494
- US-A- 4 702 898
- US-A1- 2010 059 377

## Beschreibung

Die vorliegende Erfindung betrifft ein Verfahren und eine Anlage zum Abtrennen und Gewinnen von Kohlendioxid aus der Luft.

### STAND DER TECHNIK

Das Treibhausgas CO₂ aus der Atmosphäre zu filtern, galt aufgrund des geringen CO₂-Gehalts der Luft und des hohen Energieaufwands chemischer Abscheideverfahren als ineffizient und im industriellen Maßstab kaum umsetzbar. Nichtsdestotrotz wurden und werden entsprechende Verfahren entwickelt, zumal das dabei gewonnene CO₂ nicht zwangsläufig eingelagert zu werden braucht, sondern auch beispielsweise in der Getränkeindustrie, in Gewächshäusern oder für chemische Synthesen einsetzbar ist, z. B. zur Herstellung von Methan durch Umsetzung mit Wasserstoff, der mitunter auf nachhaltige Weise durch Wasserelektrolyse unter Einsatz von Solar- und/oder Windstrom gewonnen werden kann, oder zur Herstellung von synthetischem Treibstoff. Zu letzteren Zwecken sind allerdings hohe Anforderungen an die Reinheit des abgeschiedenen CO₂ zu stellen, und es sind fortwährend große Mengen reinen Gases erforderlich, wodurch sich die Produktionskosten enorm erhöhen.

Eine moderne Methode zum Abtrennen von Kohlendioxid, die vom Schweizer Unternehmen Climeworks beispielsweise in der Schweiz und in Island praktiziert wird, besteht darin, Umgebungsluft mittels zahlreicher riesiger Ventilatoren über Filter zu blasen, deren Oberfläche mit Aminen imprägniert ist, an die das saure CO₂ adsorbiert wird. Die anschließende Desorption erfolgt durch Erhitzen der "beladenen" Filter, wofür enorme Mengen an Wärmeenergie vonnöten sind. Zwar kann dafür (zumindest großteils) die Abwärme von Kraftwerken oder Verbrennungsanlagen genutzt werden, aber der Energieaufwand des Verfahrens an sich bleibt dennoch enorm. Dies vor allem, weil bei der Desorption durch einfaches Erhitzen der Filter - was in Gegenwart von Luft erfolgt - ein Produktgas erhalten wird, das neben CO₂ auch verhältnismäßig große Mengen an N₂ enthält (typischerweise zumindest 5 Vol.-%), deren Trennung äußerst aufwändig ist. Allerdings auch, weil das mit Aminen imprägnierte Absorbens relativ instabil ist und von Zeit zu Zeit erneuert werden muss.

In US 2010/059377 A1 wird ein Verfahren zur Entfernung von CO₂ aus dem Abgas von Fabriken, insbesondere aus Anlagen zur Stromerzeugung durch Verbrennung von fossilen Brennstoffen und Kohlevergasungsanlagen, offenbart. Dieses umfasst die Absorption des CO₂ und weiterer Bestandteile des Abgases in 10- bis 50%ige wässrige K₂CO₃/KHCO₃-Lösung in einem Sprühturm, gefolgt von einem lonenaustausch zur Entfernung mehrwertiger Kationen, wonach die Lösung unter einen Druck von 2 bis 200 atm, vorzugsweise > 30 atm, gesetzt wird. Bei anschließender Elektrodialyse unter Verwendung von bipolaren Dialysemembranen wird ein Teil der Hydrogencarbonat-Ionen entfernt. Diese gehen während der Dialyse in einen auf einen konstanten pH-Wert von 3 bis 4 gepufferten Prozessstrom über, was den Grund für die vorherige Druckbeaufschlagung darstellt, um ein Ausgasen des CO₂ während der Dialyse zu verhindern. In der Folge wird dieser an CO₂ angereicherte Prozessstrom einfach entlüftet, d. h. der Druck wird aufgehoben, wodurch das CO₂ aus der stark sauren Lösung entweicht.

Nachteilig ist an diesem Verfahren vor allem der stark saure pH-Wert des an CO₂ angereicherten Prozessstroms, woraus einerseits die Notwendigkeit resultiert, während der Dialyse hohe Drücke anlegen zu müssen, was sowohl den Energie- als auch den apparativen Aufwand bei der Ausführung des Verfahrens enorm erhöht, und was andererseits einen beträchtlich höheren Energiebedarf der Dialyse bewirkt, da dieser proportional zur pH-Differenz zwischen der konzentrat- und der diluatseitigen Lösung ansteigt, wie dies in US 2010/059377 A1 auch beschrieben wird. Aufgrund dessen ist das dortige Verfahren zwar zur Abtrennung von CO₂ aus Gasgemischen geeignet, die hohe Konzentrationen an CO₂ enthalten, wie z.B. 10-25 Vol.-% oder mehr in Verbrennungsabgasen, nicht aber zur Gewinnung von CO₂ aus der Umgebungsluft, die üblicherweise nur einen CO₂-Gehalt von rund 400 ppm aufweist.

Ziel der vorliegenden Erfindung war vor diesem Hintergrund, ein neues Verfahren und eine entsprechende Anlage zu entwickeln, mittels derer CO₂ in hoher Reinheit und mit geringerem Energieaufwand als bisher auf der Luft gewonnen werden kann.

### ZUSAMMENFASSUNG DER ERFINDUNG

Dieses Ziel erreicht die vorliegende Erfindung in einem ersten Aspekt durch Bereitstellung eines Verfahrens zum Abtrennen und Gewinnen von Kohlendioxid aus der Umgebungsluft, umfassend die kontinuierliche Durchführung der folgenden Schritte:
a) In-Kontakt-Bringen von Umgebungsluft mit einer wässrigen Lösung zumindest eines Alkali- oder Erdalkalimetallkations zur Absorption des Kohlendioxids in die Lösung unter Bildung des Hydrogencarbonats bzw. Carbonats des zumindest einen Metalls;
b) Elektrodialyse der dabei erhaltenen Lösung unter Verwendung einer Kombination aus bipolaren lonentauschermembranen und für ein- oder mehrwertige Anionen selektiven lonentauschermembranen zum Erhalt einer an (Hydrogen-)Carbonat-lonen angereicherten und einer daran abgereicherten Lösung, wobei die an (Hydrogen-)Carbonat-lonen abgereicherte Lösung zu Schritt a) rezykliert wird;
c) thermische Desorption des Kohlendioxids aus der in Schritt b) erhaltenen, an (Hydrogen-)Carbonat-Ionen angereicherten Lösung mittels Dampfstrippen zum Erhalt eines Kohlendioxid-Wasserdampf-Gemischs und einer an CO₂ abgereicherten Lösung, die zu Schritt b) rezykliert wird, wobei darin ein alkalischer pH am Auslass der Elektrodialyse eingestellt wird; und
d) Abtrennung von Wasser aus dem erhaltenen Kohlendioxid-Wasserdampf-Gemisch mittels Kühlung zur Kondensation des Wasserdampfs und gegebenenfalls weitere Trocknung des Kohlendioxids.

Durch diese Abfolge von an sich bekannten Einzelschritten kann CO₂ in hoher Reinheit und relativ energieeffizient aus der Luft gewonnen werden. Durch den Anreicherungsschritt mittels Elektrodialyse b) kann das Volumen des weiteren Prozessstroms gegenüber vergleichbaren Absorptionsverfahren nach dem Stand der Technik erheblich verringert werden, was den apparatetechnischen und den Energieaufwand für Transport und die weitere Behandlung deutlich senkt. Und im Gegensatz zu den mit Aminogruppen nur oberflächlich ausgerüsteten Filtern des eingangs zitierten Standes der Technik können gemäß vorliegender Erfindung mitunter Lösungen mit hohen Konzentrationen an Alkali- oder Erdalkalimetallkationen eingesetzt werden, was auch das Volumen der anfänglichen Prozessströme und damit den Energieaufwand senkt.

In bevorzugten Ausführungsformen des erfindungsgemäßen Verfahrens wird in Schritt a) als Lösung des zumindest eines Alkali- oder Erdalkalimetallkations das Wasser eines natürlichen oder künstlichen Sees mit einer ausreichend hohen Konzentration an Alkali- oder Erdalkalimetallionen, z. B. eines Baggersees oder Tagebausees, eingesetzt, wobei die ausreichend hohe lonenkonzentration gegebenenfalls durch Basenzusatz voreingestellt wird. Allgemein wird gemäß vorliegender Erfindung aufgrund der besseren Löslichkeit der Hydroxide und Carbonate eine Lösung von Alkalimetallionen gegenüber Erdalkalimetallionen bevorzugt, noch bevorzugter von Na⁺- oder K⁺-Ionen, aus Kostengründen insbesondere von Na⁺-Ionen. Solche Elektrolytsysteme sind stabil, d. h. es findet kein Austausch oder Verlust der Elektrolytionen mit der bzw. an die Atmosphäre statt. Durch Verwendung zusätzlicher Chemikalien, wie z. B. Methanol oder Formaldehyd, kann zwar die Sorptionskapazität der Absorptionslösung bzw. die Sorptionsgeschwindigkeit erhöht werden, dies ist aber für den Betrieb des offenbarten Systems nicht notwendig und daher aus Kosten- und Umweltschutzgründen nicht bevorzugt.

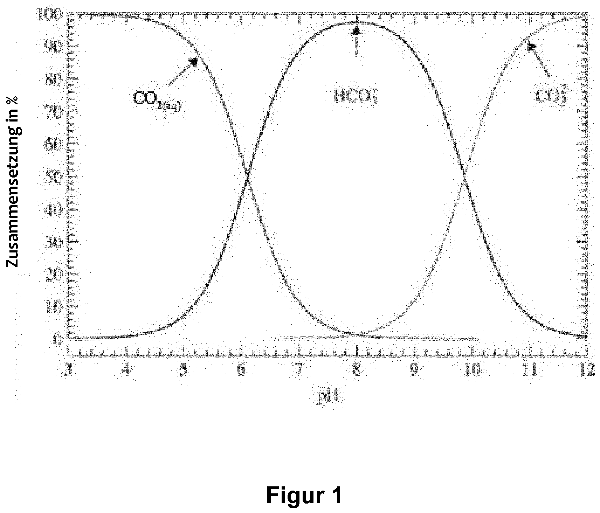

Gemäß vorliegender Erfindung bevorzugt wird allerdings, dass die Lösung einen pH von zumindest 8,0 aufweist, damit das absorbierte CO₂ nicht als relativ instabile Kohlensäure, sondern vollständig in Form von Hydrogencarbonat- oder Carbonat-Ionen vorliegt. Fig. 1 zeigt eine grafische Darstellung des pH-abhängigen Gleichgewichts zwischen den drei Spezies, worauf später noch näher eingegangen wird.

Durch die Nutzung eines natürlichen oder künstlichen stehenden Gewässers stehen in Schritt a) des Verfahrens riesige Mengen an Absorptionslösung zur Verfügung, so dass in verhältnismäßig kurzer Zeit große Mengen an CO₂ in die alkalische Lösung absorbiert werden können - und das, ohne zwangsläufig für eine Durchmischung der Lösung mit der Luft sorgen zu müssen. Vorzugsweise wird gemäß vorliegender Erfindung die wässrige Lösung des zumindest eines Alkali- oder Erdalkalimetallkations in Schritt a) aber dennoch unter Verwendung einer beliebigen Vorrichtung zur Förderung der Absorption des CO₂-Gases in die alkalische Lösung mit der Umgebungsluft in Kontakt gebracht, um die für die Absorption einer bestimmten Menge an CO₂-Gas benötigte Zeitspanne zu verkürzen und die Ausbeute des erfindungsgemäßen Verfahrens pro Zeiteinheit zu erhöhen. Neben anderen Absorbern und Gaswäschern, wie z.B. Füllkörper- oder Bodenkolonnen, Strahl-, Tauch-, Wirbel-, Rotations- oder Venturiwäschern wird gemäß vorliegender Erfindung besonders bevorzugt ein Sprühwäscher oder Sprühturm eingesetzt, da dieser sehr energieeffizent betrieben werden kann.

Durch die gute Löslichkeit beispielsweise der Hydroxide von Na oder K kann die CO₂-Sorptionskapazität des Wassers erheblich erhöht werden. Weitere positive Eigenschaften eines solchen Elektrolytsystems auf Basis von Alkalimetallen oder auch Erdalkalimetallen sind jedoch auch Nichttoxizität, Stabilität sowie eine Senkung des Wassergefrierpunkts, was bei der bevorzugten Absorption von atmosphärischen CO₂ in ein natürliches oder künstliches stehendes Gewässer die Sorptionskapazität bei tiefen Umgebungstemperaturen zusätzlich erhöht.

Die Elektrodialyse in Schritt b) des erfindungsgemäßen Verfahrens wird vorzugsweise in einem Elektrodialyse-Separator durchgeführt, in dem für die Elektrodialyse
i) bipolare lonentauschermembranen; und
ii) anionenselektive lonentauschermembranen; oder
iii) für einwertige Anionen selektive lonentauschermembranen;
eingesetzt werden, da diese Membranen die Dialyse von (Hydrogen-)Carbonat-lonen auf sehr effiziente Weise durchzuführen in der Lage sind. Dazu ist allgemein festzustellen, dass hierin mit der Angabe "(Hydrogen-)Carbonat-lonen" durchwegs "Hydrogencarbonat- und/oder Carbonationen" gemeint ist. Das bedeutet beispielsweise für den Dialyseschritt, dass je nach gewünschter Verfahrensführung entweder hauptsächlich oder im Wesentlichen nur einwertige Hydrogencarbonat- oder hauptsächlich oder im Wesentlichen nur zweiwertige Carbonat-Ionen oder beide gleichzeitig auf der Konzentratseite des Elektrodialyse-Separators angereichert werden. Welche Variante gewählt wird, hängt unter anderem von der Konzentration der Lösung des zumindest einen (Erd-)Alkalimetallions sowie vom pH-Wert derselben ab. Bei relativ stark verdünnten Lösungen, wie sie beispielsweise bei Nutzung eines natürlichen oder künstlichen stehenden Gewässers als Absorptionslösung in Schritt a) vorliegen werden, d. h.

Lösungen mit einem pH zwischen 7,5 und 8,5 liegt das absorbierte CO₂ hauptsächlich als Hydrogencarbonat vor, wie dies auch aus Fig. 1 hervorgeht.

Die Absorption, also der Phasenübergang des CO₂ aus der Gas- in die flüssige Phase, kann außerdem dadurch beschleunigt werden, indem noch höhere pH-Werte eingestellt werden, da die Gegenwart großer Mengen an Base das Gleichgewicht der chemischen Reaktionen:

NaOH + CO₂ ---+ NaHCO₃

2 NaOH + CO₂ ---+ Na₂CO₃ + H₂O

jeweils zur Produktseite hin verschiebt.

Wie zuvor erwähnt wird in bevorzugten Ausführungsformen der Erfindung in Schritt a) ein pH-Wert der Lösung des zumindest einen (Erd-)Alkalimetallions von zumindest 8 eingestellt. Allerdings hängt der besonders bevorzugte pH-Bereich auch davon ab, ob für die Absorption ein natürliches oder künstliches stehendes Gewässer oder eine andere Art von Absorber(n) genutzt wird, wie z.B. ein oder mehrere Sprühwäscher oder Sprühtürme oder dergleichen. Speziell in natürlichen Gewässern wird erfindungsgemäß besonders bevorzugt ein pH zwischen 8 und 9, insbesondere zwischen 8 und 8,5, eingestellt. Bei diesen Werten werden Schäden für die Umwelt weitgehend vermieden, und das in Lösung gegangene CO₂ liegt nahezu ausschließlich in Form von HCO₃⁻-Ionen vor, so dass pro Mol Alkalimetall-Kationen 1 mol CO₂ und pro Mol Erdalkalimetall-Kationen sogar 2 mol CO₂ gebunden werden können, was eine effiziente Nutzung der vorhandenen Basenmenge ermöglicht. Allerdings dauert der Absorptionsvorgang dadurch, wie oben erwähnt, länger als bei höheren pH-Werten über 9 oder sogar über 10. Speziell bei Verwendung von Absorbervorrichtungen wie Sprühwäschern oder dergleichen kann daher durchaus auch ein pH von 10 bis 11 eingestellt werden.

Von der Art des sich in der Lösung anreichernden Carbonats, d. h. ob es sich vorwiegend um Hydrogencarbonat oder Carbonat handelt, hängt auch die Wahl der Dialysemembranen ab. Bei Nutzung des Wassers eines stehenden Gewässers als Absorptionslösung und der erfindungsgemäß bevorzugten Einstellung eines pH-Werts zwischen 8 und 9 in der diluatseitigen Lösung des absorbierten CO₂ werden folglich in Schritt b) vorzugsweise für einwertige Anionen selektive lonentauschermembranen eingesetzt, und bei der Dialyse werden eine an Hydrogencarbonationen angereicherte und eine daran abgereicherte Lösung erhalten.

Unabhängig davon, welche lonenspezies im Dialyseschritt b) konzentratseitig angereichert und diluatseitig abgereichert werden, wird die dabei erhaltene, an (Hydrogen-) Carbonat-Ionen, vorzugsweise Hydrogencarbonat-Ionen, abgereicherte Lösung zu Schritt a) rezykliert und somit im kontinuierlichen Verfahren der vorliegenden Erfindung fortwährend zirkuliert, um dadurch für ein im Wesentlichen konstantes Flüssigkeitsvolumen in diesem (ersten) Kreislauf zu sorgen.

Die konzentratseitig an (Hydrogen-)Carbonat-, vorzugsweise Hydrogencarbonat-Ionen angereicherte Lösung wird in Schritt c) Dampfstrippen unterzogen, wofür beliebige geeignete Apparaturen oder Vorrichtungen in Frage kommen, wie z.B. Fallfilmverdampfer oder andere, hierin allgemein kollektiv als "Desorptionskolonnen" bezeichnete Desorber, in deren Boden vorzugsweise eine Dampfzuleitung von einem Verdampfer einmündet. In bevorzugten Ausführungsformen der Erfindung erfolgt das Dampfstrippen aus Effizienzgründen in einer Füllkörperkolonne und gegebenenfalls bei Unterdruck, um den Phasenübergang des Kohlendioxids aus der flüssigen in die Dampfphase zu unterstützen. Dabei wird ein Kohlendioxid-Wasserdampf-Gemisch sowie eine an CO₂ abgereicherte Lösung erhalten.

Im Gegensatz zur Lösung des zumindest eines Alkali- oder Erdalkalimetallkations im Absorber, in der, wie zuvor erwähnt, mitunter auch hohe pH-Werte über 9 oder sogar über 10 eingestellt werden können, ist in der im Dialyseschritt als Konzentrat erhaltene, an (Hydrogen-)Carbonat-, vorzugsweise Hydrogencarbonat-Ionen angereicherte Lösung vorteilhaft, ein niedrigerer pH-Wert zur Förderung der Desorption vorteilhaft. Wie Fig. 1 zu entnehmen ist, liegt das absorbierte CO₂ bei einem unter 8 sinkenden pH-Wert in zunehmend höheren Anteilen in Form von Kohlensäure, H₂CO₃, vor, die zur Decarboxylierung neigt, wodurch das absorbierte CO₂ wieder freigesetzt, also desorbiert wird. In bevorzugten Ausführungsformen der Erfindung wird daher in diesem Konzentrat ein pH-Wert unter 8,5, noch bevorzugter unter 8 oder unter 7,5, eingestellt. Würde im sauren Bereich bei einem pH unter 7 gearbeitet werden, würde dies zu Druckproblemen in der vom Separator zur Desorptionskolonne führenden Leitung aufgrund von verfrühter Desorption führen, weswegen druckbeständige Leitungen erforderlich wären, was jedoch den apparativen Aufwand erhöht.

Gemäß vorliegender Erfindung wird zudem die in Schritt c) Dampfstrippen unterzogene, an CO₂ abgereicherte Lösung zu Schritt b) rezykliert, um sie im Dialyse-Separator erneut an (Hydrogen-)Carbonat-lonen anzureichern, was wiederum für ein im Wesentlichen konstantes Flüssigkeitsvolumen in diesem zweiten Kreislauf sorgt.

Erfindungsgemäß wird aus obigen Gründen im zweiten Kreislauf vorzugsweise ein pH zwischen 7 und 8,5, noch bevorzugter zwischen 7,5 und 8,5, eingestellt, um eine Desorption vor dem Dampfstrippen zu unterdrücken und die Elektrodialyse nicht zu behindern. Zur Förderung der Decarboxylierung der Kohlensäure in der Desorptionskolonne kann die an (Hydrogen-)Carbonat-lonen angereicherte Lösung vor dem Dampfstrippen oder währenddessen erwärmt und/oder unter Vakuum gesetzt werden, worauf später noch näher eingegangen wird.

Die Abtrennung von Wasser aus dem in Schritt c) erhaltenen Kohlendioxid-Wasserdampf-Gemisch erfolgt in Schritt d) einfach mittels Kühlung des Gemischs zur Kondensation des Wasserdampfs, wodurch flüssiges Wasser und noch mehr oder weniger feuchtes Kohlendioxidgas erhalten werden, das - je nach beabsichtigtem Verwendungszweck - gegebenenfalls weiter getrocknet werden kann.

In bevorzugten Ausführungsformen des erfindungsgemäßen Verfahrens wird die in Schritt b) erhaltene, an (Hydrogen-)Carbonat-Ionen angereicherte, relativ kalte Lösung vor dem Dampfstrippen, wie bereits erwähnt, erwärmt, da höhere Temperaturen ebenfalls die Desorption des CO₂ fördern. Besonders bevorzugt erfolgt dies durch einen Wärmeaustausch mit
i) der bereits Dampfstrippen unterzogenen, relativ heißen Lösung vor deren Rezyklierung zu Schritt b); und/oder
ii) dem beim Dampfstrippen erhaltenen Kohlendioxid-Wasserdampf-Gemisch, um die an (Hydrogen-)Carbonat-lonen angereicherte Lösung vor dem Dampfstrippen zu erwärmen und gleichzeitig die durch das Dampfstrippen an (Hydrogen-)Carbonat-Ionen abgereicherte Lösung abzukühlen und/oder das Kohlendioxid-Wasserdampf-Gemisch zur Kondensation des Wasserdampfs abzukühlen.

Auf diese Weise wird ein großer Teil der im Verfahren eingesetzten Wärmemenge ebenso rezykliert wie die Flüssigkeitsströme, was die Energieeffizienz deutlich erhöht. Diese kann zudem dadurch noch weiter erhöht werden, dass das beim Abkühlen des Kohlendioxid-Wasserdampf-Gemischs erhaltene Kondensat in bevorzugten Ausführungsformen zu Schritt b) rezykliert wird und/oder zu Schritt c) rezykliert wird, um daraus erneut Wasserdampf für das Dampfstrippen zu erzeugen.

Besonders energieeffizient und umweltschonend ist das erfindungsgemäße Verfahren in bevorzugten Ausführungsformen, indem
i) zur Erzeugung des Wasserdampfs in Schritt c) und/oder zum Erwärmen der in Schritt b) erhaltenen, an (Hydrogen-)Carbonat-Ionen angereicherten Lösung vor dem Dampfstrippen in Schritt c) die Abwärme eines Kraftwerks oder einer Fabrik eingesetzt wird; und/oder
ii) für die Elektrodialyse in Schritt b) Gleichstrom aus erneuerbaren Energiequellen eingesetzt wird.

In einem zweiten Aspekt stellt die vorliegende Erfindung auch eine Anlage zur kontinuierlichen Durchführung eines Verfahrens zum Abtrennen und Gewinnen von Kohlendioxid aus der Umgebungsluft gemäß dem ersten Aspekt der Erfindung bereit, wobei diese Anlage die folgenden, miteinander in Fluidkommunikation stehenden Vorrichtungen umfasst:
a) einen Absorber oder Zu- und Ableitungen von bzw. zu einem stehenden Gewässer zum In-Kontakt-Bringen von Umgebungsluft mit einer wässrigen Lösung zumindest eines Alkali- oder Erdalkalimetallkations zur Absorption des Kohlendioxids in die Lösung unter Bildung des Hydrogencarbonats bzw. Carbonats des zumindest einen Metalls;
b) einen eine Kombination aus bipolaren lonentauschermembranen und für ein- oder mehrwertige Anionen selektiven lonentauschermembranen umfassenden Elektrodialyse-Separator zur Durchführung eines Ionenaustauschs zum Erhalt einer an (Hydrogen-)Carbonat-lonen angereicherten und einer daran abgereicherten Lösung sowie eine Leitung zum Rezyklieren der an (Hydrogen-)Carbonat-lonen abgereicherten Lösung zu a);
c) eine Desorptionskolonne zur Durchführung von Dampfstrippen der an (Hydrogen-)Carbonat-lonen angereicherten Lösung zum Erhalt eines Kohlendioxid-Wasserdampf-Gemischs und einer an CO₂ abgereicherten Lösung, sowie eine Leitung zum Rezyklieren der an CO₂ abgereicherten Lösung zu b) und Mittel zum Einstellen eines alkalischen pH-Werts am Auslass der Elektrodialyse darin; und
d) einen Kondensator zur Abtrennung von Wasser aus dem erhaltenen Kohlendioxid-Wasserdampf-Gemisch durch Kondensation und gegebenenfalls einen Trockner für das Kohlendioxid.

Mittels einer solchen Anlage kann das Verfahren gemäß dem ersten Aspekt der vorliegenden Erfindung effizient durchgeführt werden, wobei erfindungsgemäß jede der oben unter a) bis d) genannten Vorrichtungen, also der Absorber, der Separator, die Desorptionskolonne und der Kondensator, in Abhängigkeit von der jeweiligen Verfahrensführung auch in mehrfacher Ausführung - in Serie oder parallel geschaltet - vorgesehen sein kann. Das heißt, die Angaben "ein Absorber" und "der Absorber" können auch als "zumindest ein Absorber" bzw. "der zumindest eine Absorber" verstanden werden, und Ähnliches gilt sinngemäß auch für den Separator, die Desorptionskolonne und den Kondensator, worauf später in den Beispielen noch näher eingegangen wird.

Entsprechend den zuvor beschriebenen bevorzugten Ausführungsformen des Verfahrens ist die erfindungsgemäße Anlage zur Erzielung der oben ausgeführten Vorteile vorzugsweise durch eines oder mehrere - insbesondere durch alle - der folgenden acht Merkmale gekennzeichnet:
1) der Absorber ist ein Sprühwäscher oder Sprühturm;
2) der Elektrodialyse-Separator ist mit bipolaren lonentauschermembranen und mit für einwertige Anionen selektiven lonentauschermembranen ausgestattet, um im Wesentlichen nur Hydrogencarbonat-Ionen zur Konzentratseite gelangen zu lassen;
3) die Desorptionskolonne ist eine Füllkörperkolonne;
4) die Desorptionskolonne ist zum Einleiten von Wasserdampf mit einem Verdampfer verbunden;
5) die Desorptionskolonne ist mit einer Vakuumpumpe verbunden, um darin einen Unterdruck zu erzeugen;
6) zwischen dem Elektrodialyse-Separator und der Desorptionskolonne ist eine Heizeinrichtung zum Erwärmen der an (Hydrogen-)Carbonat-Ionen angereicherten Lösung vor dem Dampfstrippen vorgesehen, wobei die Heizeinrichtung vorzugsweise ein Wärmetauscher ist, um die im Elektrodialyse-Separator an (Hydrogen-)Carbonat-lonen angereicherte, relativ kalte Lösung vor dem Dampfstrippen einem Wärmeaustausch mit
   i) der bereits Dampfstrippen unterzogenen, relativ heißen Lösung vor deren Rezyklierung zum Elektrodialyse-Separator zu unterziehen, um die erstere Lösung zu erwärmen und die zweitere Lösung abzukühlen; und/oder
   ii) dem beim Dampfstrippen erhaltenen Kohlendioxid-Wasserdampf-Gemisch zu unterziehen, um sie zu erwärmen und das Kohlendioxid-Wasserdampf-Gemisch zur Kondensation des Wasserdampfs abzukühlen;
7) der Kondensator zum Rezyklieren des beim Abkühlen des Kohlendioxid-Wasserdampf-Gemischs erhaltenen Kondensats ist
   i) über eine Leitung mit dem Elektrodialyse-Separator verbunden; und/oder
   ii) über eine Leitung mit dem Verdampfer verbunden, um aus dem Kondensat erneut Wasserdampf zu erzeugen.

Weitere Steigerungen der Energieeffizienz und der Umweltverträglichkeit der erfindungsgemäßen Anlage lassen sich erzielen, indem - wie ebenfalls bereits zuvor zum Verfahren der Erfindung ausgeführt wurde - die Anlage:
i) über entsprechende Rohrleitungen mit einem Kraftwerk oder einer Fabrik in Verbindung steht, um zur Erzeugung des Wasserdampfs in Schritt c) und/oder zum Erwärmen der in Schritt b) erhaltenen, an (Hydrogen-)Carbonat-Ionen angereicherten Lösung vor dem Dampfstrippen in Schritt c) deren Abwärme zu nutzen; und/oder
ii) über eine Stromleitung mit einer erneuerbaren Energiequelle in Verbindung steht, um für die Elektrodialyse in Schritt b) den dort umweltfreundlich erzeugten Gleichstrom zu nutzen.

### KURZBESCHREIBUNG DER ZEICHNUNGEN

Die vorliegende Erfindung wird nachstehend anhand von bevorzugten Ausführungsformen, die freilich nur zu Illustrationszwecken angeführt sind und die Erfindung nicht einschränken sollen, eines Berechnungsbeispiels für den Energieverbrauch des erfindungsgemäßen Verfahrens und der zugehörigen Anlage, sowie unter Bezugnahme auf die beiliegenden Zeichnungen näher beschrieben, die Folgendes zeigen:
Fig. 1 ist ein Diagramm des pH-abhängigen Gleichgewichts zwischen Kohlensäure, Hydrogencarbonat und Carbonat in wässrigen Lösungen.
Fig. 2 ist ein Fließbild einer besonders bevorzugten Ausführungsform des erfindungsgemäßen Verfahrens bzw. der erfindungsgemäßen Anlage.
Fig. 3 ist eine schematische Darstellung einer bevorzugten Anordnung anionenselektiver ("A") und bipolarer ("AK") Membranen im Elektrodialyse-Separator in Schritt b) des Verfahrens.

### BEISPIELE

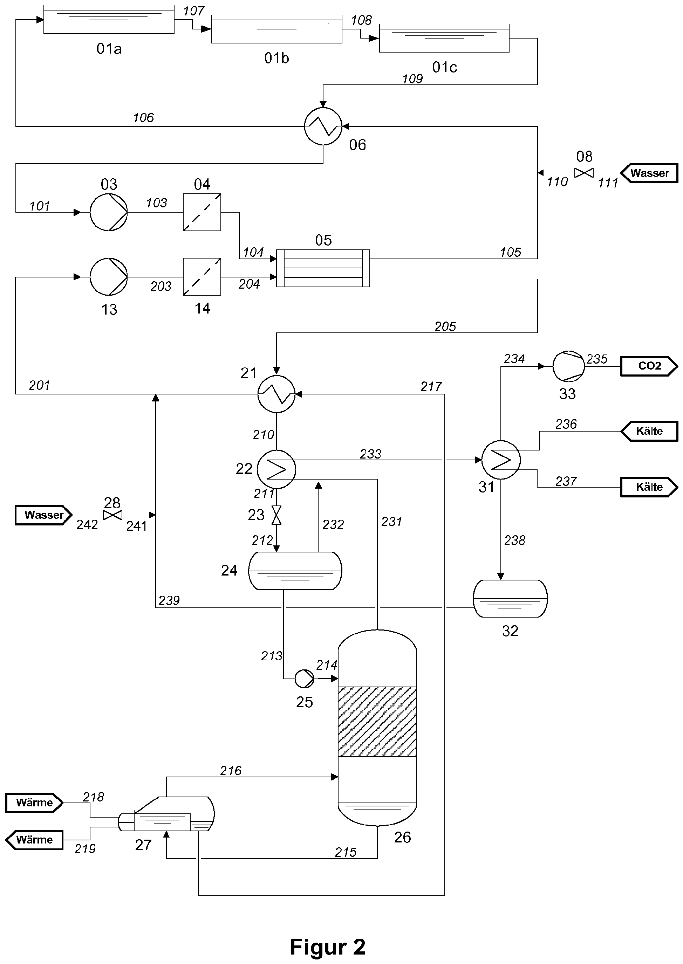

Bevorzugte Ausführungsformen zur Durchführung des erfindungsgemäßen Verfahrens bzw. der erfindungsgemäßen Anlage können wie in Fig. 2 schematisch dargestellt ausgelegt sein. Die darin enthaltenen Bezugszeichen haben die folgende Bedeutung, wobei die dreistelligen Bezugszeichen für Leitungen gleichzeitig die darin transportierten Fluidströme kennzeichnen.

### Legende Fig. 2:

- 01a: Absorber / See
- 01b: Absorber / See
- 01c: Absorber / See
- 06: Wärmetauscher Diluat-Einlass/Diluat-Auslass ("Economizer")
- 08: Ventil - Frischwasser für Diluat
- 03: Umwälzpumpe Diluat
- 04: Filtration/Konditionierung Diluat
- 05: Elektrodialyse
- 13: Umwälzpumpe Konzentrat
- 14: Filtration/Konditionierung Konzentrat
- 21: Wärmetauscher Konzentrat-Einlass/Konzentrat-Auslass ("Economizer")
- 22: Wärmetauscher Konzentrat-Auslass/CO₂ nass ("Economizer")
- 23: Entspannungsventil
- 24: Entspannungsbehälter
- 25: Berieselungspumpe
- 26: Regenerationskolonne / Desorptionskolonne
- 27: Verdampfer
- 28: Ventil - Frischwasser für Konzentrat
- 31: Kondensator / Trockner
- 32: Kondensatbehälter
- 33: Vakuumpumpe

- 101: Diluat, erwärmt
- 103: Diluat unter erhöhtem Druck
- 104: Diluat, konditioniert/filtriert
- 105: Diluat, rezykliert zur Absorption, warm
- 106: Diluat, rezykliert zur Absorption, kalt
- 107: Verbindung Absorber
- 108: Verbindung Absorber
- 109: Diluat, kalt

- 201: Konzentrat, kühl
- 203: Konzentrat mit erhöhtem Druck
- 204: Konzentrat, konditioniert/filtriert
- 205: Konzentrat, rezykliert zur Desorption, kalt
- 210: Konzentrat, erwärmt
- 211: Konzentrat, erwärmt
- 212: Konzentrat, entspannt
- 213: Konzentrat nach Entspannung im Entspannungsbehälter
- 214: Konzentrat, berieselt
- 215: Konzentratzufuhr zum Verdampfer
- 216: Dampf/CO₂-Gemisch zur Regenerierung
- 217: Konzentrat, regeneriert
- 231: CO₂, nass, warm
- 233: CO₂, nass, kalt
- 234: CO₂, getrocknet
- 235: CO₂, getrocknet, kein Unterdruck
- 238: Kondensat
- 239: Kondensatrückführung zum Konzentrat

- 218: Wärmezufuhr zum Verdampfer
- 219: Wärmezufuhr zum Verdampfer
- 241-242: Frischwasser für Konzentrat
- 236-237: Kälte für die Kältetrocknung
- 110-111: Frischwasser für Diluat

Das erfindungsgemäße Verfahren sowie die erfindungsgemäße Anlage beginnen, wie in Fig. 2 ganz oben dargestellt, mit mehreren über Leitungen 107 und 108 seriell verbundenen Absorbern 01a-c zur Absorption von CO₂ aus der Umgebungsluft, bei denen es sich in bevorzugten Ausführungsformen entweder um das Wasser aus natürlichen oder künstlichen Gewässern, wie z.B. Seen oder Baggerteichen, oder auch um Sprühwäscher oder Sprühtürme oder eine Kombination davon handeln kann. Im Falle von mehreren Absorbern kann die darin enthaltene wässrigen Lösung zumindest eines Alkali- oder Erdalkalimetallkations zur Absorption des Kohlendioxids auf unterschiedliche pH-Werte eingestellt werden, indem sie beispielsweise unterschiedliche Konzentrationen des zumindest eines Alkali- oder Erdalkalimetallkations enthalten oder indem der jeweilige pH auf andere Weise, z. B. durch gesonderten Säure- oder Basenzusatz, eingestellt wird.

Besonders bevorzugt handelt es sich bei den Kationen - aus Gründen der besseren Löslichkeit der Hydroxide und Carbonate gegenüber Erdalkalimetallionen - um Alkalimetallkationen, noch bevorzugter um Na⁺- oder K⁺-Ionen oder ein Gemisch davon. Im späteren Rechenbeispiel kommen K⁺-Ionen zum Einsatz. Weiters kann die Lösung in den Absorbern Zusätze zur Erhöhung der Sorptionskapazität der Absorptionslösung bzw. der Sorptionsgeschwindigkeit enthalten, wie z.B. niedere Alkohole oder Formaldehyd, diese sind allerdings für die Wirkungsweise der Erfindung nicht erforderlich und aus Umweltschutz- und Kostengründen auch nicht bevorzugt.

In der alkalischen Lösung kommt es durch Absorption von CO₂ aus der Umgebungsluft - sei es aufgrund von spontaner Absorption ohne äußere Einwirkung oder durch beschleunigte Absorption beispielsweise in einem Sprühturm - in Abhängigkeit vom pH-Wert der Lösung zur Bildung von Hydrogencarbonat- und/oder Carbonat-Anionen. Vorzugsweise wird im Falle der Nutzung eines oder mehrerer stehenden Gewässer ein pH zwischen 7,5 und 8,5 eingestellt, bei dem das absorbierte CO₂ hauptsächlich als Hydrogencarbonat vorliegt, wie dies der grafischen Darstellung des Gleichgewichts zwischen Kohlensäure, Hydrogencarbonat und Carbonat in Fig. 1 entnommen werden kann. Ein höherer pH-Wert könnte Schädigungen der Umwelt zur Folge haben. Kommen hingegen Absorptionsvorrichtungen wie Sprühwäscher oder -türme zum Einsatz, so kann zur Förderung der Absorption vorzugsweise auch ein deutlich höherer pH eingestellt werden, z. B. ein pH-Wert zwischen 10 und 11.

Die alkalische Lösung des absorbierten CO₂ wird in der Folge einem Dialyseschritt unterzogen und zu diesem Zweck einem Elektrodialyse-Separator 05 zugeführt. Dies kann entweder direkt erfolgen oder, wie in Fig. 2 dargestellt, vorzugsweise nach vorheriger Erwärmung und/oder Filtration bzw. Konditionierung der Lösung. Durch die Erwärmung wird einerseits der Stoffübergang während des Dialysevorgangs beschleunigt und andererseits kann zu diesem Zweck die Wärme eines später im Verfahren anfallenden, aber zu einer vorherigen Stufe rezyklierten Flüssigkeitsstroms genutzt werden, die ansonsten als Abwärme verloren gehen würde. Folglich wird die optionale Erwärmung vorzugsweise mittels eines Wärmetauschers 06 durchgeführt, dem die alkalische Lösung des absorbierten CO₂ über eine Leitung 109 zugeführt wird, und besonders bevorzugt erfolgt der Wärmeaustausch mit dem während der Dialyse an (Hydrogen)Carbonat-lonen abgereicherten Lösung, bevor diese zum Absorptionsschritt rezykliert wird. Durch die optionale Filtration können vor der Dialyse Verunreinigungen, wie sie speziell bei Nutzung stehender Gewässer als Absorptionslösung auftreten können, weitgehend aus der Lösung entfernt werden, und unter Konditionierung ist hierin der optional erfolgende Zusatz von pH-Reglern und/oder sonstigen Additiven zur Förderung der Absorptions- und Desorptionsvorgänge zu verstehen. In bevorzugten Ausführungsformen werden Filtration und Konditionierung im Wesentlichen gleichzeitig in einem Filter/Konditionierer 04 durchgeführt, dem die alkalische Lösung des absorbierten CO₂ in Fig. 2 über Leitung 101, Pumpe 03 und Leitung 103 zugeführt wird.

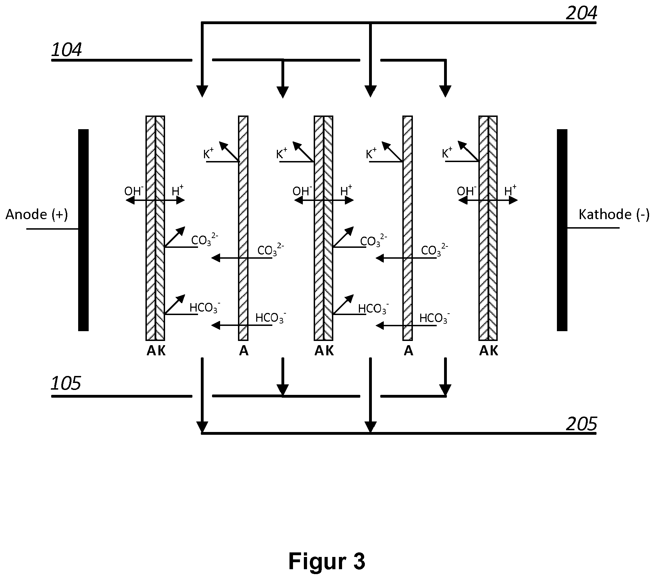

Von dort gelangt die erwärmte und filtrierte/konditionierte Lösung über Leitung 104 in den Elektrodialyse-Separator 05, wo eine an (Hydrogen)Carbonat-lonen abgereicherte und einer daran angereicherten Lösung erhalten werden. Bei der erfindungsgemäß bevorzugten Wahl eines pH-Werts der alkalischen Lösung im Absorptionsschritt zwischen 10 und 11 - für den Fall der Verwendung von Sprühwäschern als Absorber - wird im Elektrodialyse-Separator 05 eine Kombination aus anionenselektiven Ionentauschermembranen "A" und bipolaren Membranen "AK" eingesetzt, um die Dialyse wie in Fig. 3 dargestellt vorzunehmen. Wird hingegen beispielsweise bei einem stehenden Gewässer als Absorptionslösung nur ein pH zwischen 7,5 und 8,5 eingestellt, bei dem das absorbierte CO₂ vorwiegend als Hydrogencarbonat und nur in sehr geringem Ausmaß als Carbonat vorliegt, können anstelle der anionenselektiven Membranen "A" nur für einwertige Anionen selektive lonentauschermembranen eingesetzt werden, um selektiv nur Hydrogencarbonat diluatseitig ab- und konzentratseitig anzureichern.

Das so im Separator 05 erhaltene Konzentrat wird über eine Leitung 205 zum nächsten Schritt, dem Dampfstrippen, weitergeleitet, während das an CO₂ abgereicherte Diluat, das im Verlauf der Dialyse in der Regel eine Erwärmung durch die vorzugsweise vom Dampfstrippen zur Dialyse rezyklierte, warme Lösung erfährt, über Leitung 105 zum Wärmetauscher 06 rezykliert wird, wo es seine Wärme an die alkalische Lösung des absorbierten CO₂ abgibt, bevor diese zum Dialyseschritt gelangt, und in der Folge über Leitung 106 zu den Absorbern 01a bis 01c zurück rezykliert wird. Um in diesem Kreislauf der Absorberlösung etwaige Wasserverluste auszugleichen, ist vorzugsweise eine Wasserzuleitung vorgesehen, die in den Leitungen 110 und 111 mit dem dazwischen befindlichen Ventil 08 besteht.

Die Weiterleitung der im Elektrodialyse-Separator an (Hydrogen)Carbonat-lonen angereicherten Lösung zum Dampfstrippen über Leitung 205 kann wiederum direkt erfolgen, oder sie kann in bevorzugten Ausführungsformen der vorliegenden Erfindung davor verschiedenen Operationen unterzogen werden, besonders bevorzugt einem Wärmeaustausch, insbesondere mit einem oder mehreren der beim Dampfstrippen anfallenden Verfahrensströme, um sie vor Eintritt in die Desorptionskolonne 26 zu erwärmen und so die Desorption zu fördern. Außerdem kann die während des Pumpens unter einem Überdruck stehende Lösung zu demselben Zweck auch einem Entspannungsschritt unterzogen werden.

Eine Kombination aus beiden Maßnahmen ist in Fig. 2 dargestellt: Über Leitung 205 gelangt die angereicherte Lösung vom Elektrodialyse-Separator 05 zunächst zu einem Wärmetauscher 21, wo sie einem Wärmeaustausch mit der vom Dampfstrippen über Leitung 217 rezyklierten alkalischen Lösung unterzogen wird, und wird dann über Leitung 210 einem weiteren Wärmetauscher 22 zugeführt, wo sie einem Wärmeaustausch mit dem beim Dampfstrippen erhaltenen, heißen Gasgemisch aus Wasserdampf und Kohlendioxid unterzogen wird, das dem Wärmetauscher 22 über Leitung 231 zugeführt wird. Anschließend wird die so erhitzte Lösung noch über die Leitungen 211 und 212 und Ventil 23 einem Entspannungsbehälter 24 zugeführt, um sie zu entspannen. Etwaiges während dieser Entspannung bereits desorbierendes CO₂ wird vom Entspannungsbehälter 24 über Leitung 232 in die Leitung 231 und somit in das dem Wärmetauscher 22 zugeführte, heiße CO₂/H₂O-Gasgemisch eingespeist. Die entspannte Lösung wird danach über die Leitungen 213 und 214 und die Berieselungspumpe 25 in die Desorptionskolonne 26 eingeleitet, um dort Dampfstrippen unterzogen zu werden.

An die Desorptionskolonne 26 ist dabei vorzugsweise ein Verdampfer 27 angeschlossen, der den für das Dampfstrippen erforderlichen Wasserdampf generiert, der über Leitung 216 in die Kolonne eingespeist wird. Der Verdampfer wird dabei vorzugsweise mit der Abwärme eines Kraftwerks oder einer Verbrennungsanlage betrieben, wie dies in Fig. 2 über die Leitungen 218 und 219 angedeutet ist. Alternativ oder zusätzlich dazu könnte auch die Wärme des in der Desorptionskolonne erhaltenen heißen Gasgemischs aus CO₂ und Wasserdampf über einen Wärmetauscher dem Verdampfer 27 zugeführt werden.

In der Desorptionskolonne 26, bei der es sich vorzugsweise um eine Füllkörperkolonne handelt, wie dies in Fig. 2 durch die Schraffur angedeutet ist, wird die an (Hydrogen-)Carbonat-lonen angereicherte und vorerwärmte Lösung im Gegenstrom zum aufsteigenden heißen Wasserdampf geführt, wodurch es zur Decarboxylierung und Desorption des als (Hydrogen-)Carbonat gelösten CO₂ und zur Ausbildung des erwähnten heißen Gasgemischs aus Kohlendioxid und Wasserdampf kommt, das über Leitung 231 aus der Kolonne ausgeleitet wird. Zur Unterstützung der Desorption kann in der (Hydrogen-)Carbonat-Lösung zusätzlich der pH gesenkt werden, beispielsweise durch Einspeisung von gasförmiger oder wässriger HCl, was aber aus Kosten- und Umweltschutzgründen nicht bevorzugt wird.

Die an CO₂ abgereicherte alkalische Lösung wird rezykliert, und zwar entweder direkt - oder nach vorherigem Wärmeaustausch mit der zu desorbierenden Lösung im Wärmetauscher 21 - zum Dialyseschritt oder aber zunächst erneut in die Desorptionskolonne 26, um die Desorption zu vervollständigen, bevor sie zum Elektrodialyse-Separator 05 rezykliert wird. Letztere Variante in in Fig. 2 dargestellt: Die Desorption unterzogene Lösung wird über Leitung 215 dem Verdampfer 27 zugeführt, wo sie zur Erzeugung des Wasserdampfs für das Dampfstrippen eingesetzt wird, wobei es gleichzeitig zur Desorption von zu diesem Zeitpunkt noch gelöstem CO₂ kommt, so dass bereits hier ein heißes gasförmiges Gemisch aus CO₂ und H₂O - wenn auch mit vergleichsweise geringeren Anteilen an CO₂ als in der Kolonne - gebildet wird, das als oben erwähnter "Wasserdampf" in die Desorptionskolonne 26 eingeleitet und dort ein weiteres Mal Desorption unterzogen wird, was hierin als "Regeneration" bezeichnet wird. Gleichzeitig wird jedoch ein Teil der Lösung kontinuierlich aus dem Verdampfer 27 abgezogen und über Leitung 217 zum Separator 05 rezykliert, wobei dieser Anteil der mehrmals Desorption unterzogenen Lösung als "Regenerat" bezeichnet wird.

Auf dem Weg zurück zur Elektrodialyse wird die rezyklierte Lösung 217 wie erwähnt im Wärmetauscher 21 einem Wärmeaustausch mit der erst noch dem Dampfstrippen zu unterziehenden Lösung 205 aus dem Dialyseschritt unterzogen, um Letztere vor dem Dampfstrippen zu erwärmen. Von dort gelangt sie über die Leitungen 201 und 203 und Pumpe 13 vorzugsweise ebenfalls, d. h. wie auch die diluatseitig zyklierte Lösung, zu einem Filter/Konditionierer 14, um vor der Dialyse Verunreinigungen zu entfernen und gegebenenfalls den pH-Wert einzustellen, und von da über Leitung 204 in den Elektrodialyse-Separator 05. Gegebenenfalls kann die Wassermenge der so zirkulierten Lösung über eine (nicht dargestellte) Wassereinspeisung ergänzt werden. Vorzugsweise erfolgt diese Ergänzung jedoch in einem weiteren Rezyklat im erfindungsgemäßen Verfahren, nämlich jenem des zusammen mit dem desorbierten CO₂ als Gasgemisch aus der Kolonne 26 abgeleiteten Wasserdampfs. Dieser wird in bevorzugten Ausführungsformen wie erwähnt über Leitung 231 einem Wärmetauscher 22 zugeführt, wo er einen Teil der Wärme an die Dampfstrippen zu unterziehende, im Dialyseschritt an (Hydrogen-)Carbonat-lonen angereicherte Lösung abgibt, wonach er einem Kühler 31 zugeführt wird, um das Wasser aus dem Gemisch auszukondensieren und so großteils von Wasser befreites CO₂ zu erhalten. Letzteres wird über die Leitungen 234 und 235 sowie Pumpe 33 aus dem Verfahren abgezogen, wobei es - je nach Verwendungszweck - gegebenenfalls einer weiteren Trocknung unterzogen werden kann.

Der Kühler 31 kann beispielsweise mit dem kalten Wasser eines natürlichen fließenden Gewässers (oder auch stehenden Gewässers) betrieben werden. Das darin anfallende und im Kondensatbehälter 32 gesammelte Kondenswasser wird gemäß vorliegender Erfindung vorzugsweise über Leitung 239 in das aus dem Wärmetauscher 21 ausgeleitete Rezyklat 201 auf dessen Weg zurück zur Dialyse eingespeist und so rezykliert, wobei hier vorzugsweise die zusätzliche Wassereinspeisung über die Leitungen 241 und 242 sowie das Ventil 28 vorgesehen ist, um das Lösungsvolumen konstant zu halten.

Durch diese Verfahrensschritte unter Zirkulierung des Wassers in zwei Kreisläufen auf der Diluat- bzw. der Konzentratseite des Elektrodialyse-Separators kann das Verfahren der vorliegenden Erfindung auf höchst effiziente Weise ausgeführt werden, wie das nachfolgende Rechenbeispiel klar belegt. Allerdings versteht es sich, dass das oben detailliert beschriebene Verfahren sowie die zugehörige Anlage der vorliegenden Erfindung auch mit zahlreichen Variationen in die Praxis umgesetzt werden können, solange diese im durch die beiliegenden Ansprüche definierten Schutzbereich liegen. Beispielsweise kann der Elektrodialyse-Separator 05, je nach technischer Ausführung, mit diversen herkömmlichen Nebenaggregaten ausgerüstet sein, wie z. B. internen Rezirkulationspumpen für eine Intensivierung des lonentransportes, und/oder Antifouling-Systemen (z. B. durch Alternieren der elektrischen Polung). Da es bei längerem Betrieb der Anlage durch Membrandefekte im Separator zur Anreicherung von Metallionen in einem der Kreisläufe kommen kann, kann die Elektrodialyse darüber hinaus unter Verwendung zusätzlicher Pumpen für einen periodischen oder kontinuierlichen Ausgleich der Metallionen im Diluat oder im Konzentrat durchgeführt werden. Nichtsdestotrotz umfassen besonders bevorzugte Ausführungsformen des erfindungsgemäßen Verfahrens und der erfindungsgemäßen Anlage zwei separate Flüssigkeitskreisläufe.

### Rechenbeispiel

In diesem Beispiel wurde ein Modell für das erfindungsgemäße Verfahren und die erfindungsgemäßen Anlage wie in Fig. 2 dargestellt auf Basis empirischer Daten computerunterstützt durchgerechnet, um den erforderlichen Energieverbrauch abschätzen zu können.

Das Modell basiert auf den folgenden Annahmen:
- Es ist Winter, und die Umgebungstemperatur beträgt 10 °C. Da die Löslichkeit von Gasen in Flüssigkeiten mit sinkender Temperatur zunimmt, kann das erfindungsgemäße Verfahren durchaus auch bei sehr tiefen Temperaturen im Freien durchgeführt werden.
- Als Absorber dient ein großes, künstliches Becken, von dem an drei Stellen, 01a bis 01c, wässrige (Hydrogen-)Carbonat-Lösung abgezogen wird.
- Die alkalische Absorptionslösung ist eine im Handel erhältliche, rund 20%ige Kalilauge (Gew.-%), wie sie beispielsweise zur Verwendung als Elektrolytlösung zum Einsatz kommt, die einen pH von etwa 10,5 aufweist.
- Der pH-Wert wird nur in den Absorptionsbecken eingestellt und regelt sich im weiteren Verlauf des Verfahrens durch die vom CO₂-Partialdruck der Umgebungsluft abhängige Gleichgewichtseinstellung von selbst.
- Die zur Dampferzeugung erforderliche Wärme wird in Form von elektrischer Energie bereitgestellt.
- Die Desorption erfolgt bei einem Unterdruck von 460 mbara (mbar absolutem Druck).
- Die zum Betreiben des Kondensators 31 erforderliche Kühlung erfolgt mittels elektrischer Energie.

Alle weiteren Annahmen und ausgewählten bzw. (von selbst) eingestellten Parameter sind in der umseitigen Tabelle 1 angeführt.

**Tabelle 1**

| **Beschreibung** | **Bezugszeichen** | **Parameter** | **Einheit** | **Nominalwert** | **Bereich** | **Kommentar** |
|---|---|---|---|---|---|---|
| Atmosphäre | 01a ... 01c | CO₂-Gehalt | Vol.-ppm | 450 | 290 bis 1000 | |
| | | Temperatur | °C | +10 | -30 bis +40 | Erfindung auch bei Frost ausführbar |
| Diluat Einlass nach Absorption von CO₂ | 109 ... 104 | Salzgehalt Lösung | Gew.-% | -20 | 1 bis 40 | |
| | | Konzentration HCO₃⁻ | mol/l | 0,44 | 0,04 bis 0,9 | |
| | | Konzentration CO₃²⁻ | mol/l | 1,5 | 0,15 bis 3,0 | |
| | | Temperatur Lösung an 104 | °C | 17 | 5 bis 40 | |
| | | pH-Wert Lösung | - | 10,4 | 8 bis 11,5 | |
| Diluat Auslass | 105 ... 106 | Konzentration HCO₃⁻ | mol/l | ~0 | 0 bis 0,1 | |
| | | Konzentration CO₃²⁻ | mol/l | 1,72 | 0,17 bis 5,5 | |
| Elektrodialyse | 05 | Abreicherung HCO₃⁻ im Diluat | mol/l | 0,22 | 0,02 bis 0,5 | bei Verwendung von für einwertige Anionen selektiven Membranen bezogen auf 1 m³ Diluatstrom |
| | | Abreicherung CO₃²⁻ im Diluat | mol/l | ~0 | ~0 bis 0,5 | |
| | | Übergang CO₂ aus Diluat ins Konzentrat | Nm³ CO₂ / m³ | 4,9 | 0,4 bis 12 | |
| | | **Stromverbrauch** | **kWh/Nm³ CO₂** | **3,5** | **2,4 bis 6,0** | |
| Konzentrat Auslass | 205 ... 214 | Salzgehalt Lösung | Gew.-% | -20 | 10 bis 40 | |
| | | Konzentration HCO₃⁻ | mol/l | 3,0 | 1,7 bis 6,1 | |
| | | Konzentration CO₃²⁻ | mol/l | 0,21 | 0,05 bis 1,2 | |
| | | Verhältnis der Volumenströme Konzentrat/Diluat | - | 0,3 | 0,1 bis 1,2 | üblicherweise < 0,4 |
| | | Temperatur Konzentrat an 205 | °C | 19 | 15 bis 40 | |
| | | Temperatur Konzentrat an 210 | °C | 73 | 60 bis 125 | |
| | | Temperatur Konzentrat an 211 | °C | 76 | 60 bis 125 | |
| | | pH-Wert Konzentrat | - | 8,5 | 8 bis 9,5 | |
| Desorption / Regeneration | 26, 27 | Kolonnentemperatur | °C | 80 | 70 bis 130 | |
| | | Kolonnendruck | mbara | 470 | 300 bis 1500 | |
| | | erzeugte Dampfmenge | kg/Nm³ CO₂ | 1,6 | 1,2 bis 3,8 | |
| | | **Wärmebedarf** | **kWh/Nm³ CO₂** | **1** | **0,8 bis 2,1** | |
| Gasgemisch H₂O/CO₂ | 231 ... 233 | Anteil CO₂ im Gemisch | Vol.-% | 34 | 12 bis 59 | |
| Konzentrat Einlass | 201 ... 204 | Konzentration HCO₃⁻ | mol/l | 1,74 | 0,93 bis 2,6 | |
| | | Konzentration CO₃²⁻ | mol/l | 0,85 | 0,35 bis 2,1 | |
| | | Temperatur an 204 | °C | 22 | | |
| Kondensator, Gasgemisch H₂O/CO₂ | 31, 234 | Gasgemisch nach Kühlung | | | | |
| | | Temperatur | °C | 4 | 2 bis 8 | |
| | | Anteil CO₂ im Gemisch | Vol.-% | 96 | 85 bis 99 | |
| | | **Stromverbrauch Kühlung** | **kWh/Nm³ CO₂** | **0,22** | **0,15 bis 0,4** | |
| Wärmerückgewinnung | 21, 22 | **spezifische Wärmeverluste Summe** | **kWh/Nm³ CO₂** | **0,41** | **0,27 bis 0,9** | |
| Unterdruckerzeugung | 33 | Druck saugseitig | mbara | 460 | 300 bis 1000 | |
| | | Druck druckseitig | mbara | 1100 | 950 bis 1500 | |
| | | **Stromverbrauch** | **kWh/Nm³ CO₂** | **0,08** | **0,05 bis 0,1** | |
| **Energiebedarf insgesamt** | | **Elektrische Energie** | **kWh/Nm³ CO₂** | **3,8** | **2,6 bis 6,5** | |
| | | **Wärmeenergie** | **kWh/Nm³ CO₂** | **1,41** | **1,07 bis 3,0** | |

Aus der Tabelle ergibt sich, dass pro Normkubikmeter CO₂, der aus der Atmosphäre absorbiert und als zu 96 Vol.-% reines Gas (Rest: H₂O) an Position 235 in Fig. 2 gewonnen wird, lediglich verhältnismäßig geringe Mengen an elektrischer Energie von 3,8 kWh und an Wärmeenergie von 1,41 kWh erforderlich sind.

Dazu kommt, dass die zur Dampferzeugung im Verdampfer 27 erforderliche Wärmeenergie, wie zuvor erwähnt, aus der Abwärme eines nahe der erfindungsgemäßen Anlage gelegenen Kraftwerks (oder Fabrik) und die zur Kühlung im Kondensator 31 benötigte Energie zumindest teilweise durch die Verwendung von bereits relativ kaltem Wasser eines nahe gelegenen Flusses oder Sees aufgebracht werden könnte, was die Kosten für die CO₂-Gewinnung noch weiter senken würde.

Die vorliegende Erfindung stellt demnach ein außerordentlich effizientes und wirtschaftliches Verfahren und eine zugehörige Anlage bereit, mittels derer Kohlendioxid kontinuierlich und in vergleichsweise hoher Reinheit aus der Luft gewonnen werden kann.

### ZUSAMMENFASSUNG

Die Erfindung betrifft ein Verfahren zum Abtrennen und Gewinnen von Kohlendioxid aus der Umgebungsluft, umfassend die kontinuierliche Durchführung der folgenden Schritte:
a) In-Kontakt-Bringen von Umgebungsluft mit einer wässrigen Lösung zumindest eines Alkali- oder Erdalkalimetallkations zur Absorption des Kohlendioxids in die Lösung unter Bildung des Hydrogencarbonats bzw. Carbonats des zumindest einen Metalls;
b) Elektrodialyse der dabei erhaltenen Lösung unter Verwendung einer Kombination aus bipolaren lonentauschermembranen und für ein- oder mehrwertige Anionen selektiven lonentauschermembranen zum Erhalt einer an (Hydrogen-)Carbonat-lonen angereicherten und einer daran abgereicherten Lösung, wobei die an (Hydrogen-)Carbonat-lonen abgereicherte Lösung zu Schritt a) rezykliert wird;
c) thermische Desorption des Kohlendioxids aus der in Schritt b) erhaltenen, an (Hydrogen-)Carbonat-Ionen angereicherten Lösung mittels Dampfstrippen zum Erhalt eines Kohlendioxid-Wasserdampf-Gemischs und einer an CO₂ abgereicherten Lösung, die zu Schritt b) rezykliert wird, wobei darin ein alkalischer pH > 7 eingestellt wird; und
d) Abtrennung von Wasser aus dem erhaltenen Kohlendioxid-Wasserdampf-Gemisch mittels Kühlung zur Kondensation des Wasserdampfs und gegebenenfalls weitere Trocknung des Kohlendioxids;
sowie eine Anlage zur kontinuierlichen Durchführung des Verfahrens.
(Fig. 2)

## Patentansprüche

1. Verfahren zum Abtrennen und Gewinnen von Kohlendioxid aus der Umgebungsluft, umfassend die kontinuierliche Durchführung der folgenden Schritte:
a) In-Kontakt-Bringen von Umgebungsluft mit einer wässrigen Lösung (01) zumindest eines Alkali- oder Erdalkalimetallkations zur Absorption des Kohlendioxids in die Lösung unter Bildung des Hydrogencarbonats bzw. Carbonats des zumindest einen Metalls;
b) Elektrodialyse (05) der dabei erhaltenen Lösung (109, 104) unter Verwendung einer Kombination aus bipolaren lonentauschermembranen und für ein- oder mehrwertige Anionen selektiven lonentauschermembranen (A, AK) zum Erhalt einer an (Hydrogen-)Carbonat-lonen angereicherten und einer daran abgereicherten Lösung (205; 105), wobei die an (Hydrogen-)Carbonat-lonen abgereicherte Lösung (105) zu Schritt a) rezykliert wird;
c) thermische Desorption (26) des Kohlendioxids aus der in Schritt b) erhaltenen, an (Hydrogen-)Carbonat-Ionen angereicherten Lösung (205) mittels Dampfstrippen zum Erhalt eines Kohlendioxid-Wasserdampf-Gemischs (231) und einer an CO₂ abgereicherten Lösung (215), die zu Schritt b) rezykliert wird, wobei darin ein alkalischer pH am Auslass der Elektrodialyse eingestellt wird; und
d) Abtrennung von Wasser (31) aus dem erhaltenen Kohlendioxid-Wasserdampf-Gemisch (231) mittels Kühlung zur Kondensation des Wasserdampfs und gegebenenfalls weitere Trocknung des Kohlendioxids.

2. Verfahren nach Anspruch 1, **dadurch gekennzeichnet, dass** in Schritt a) als Lösung des zumindest eines Alkali- oder Erdalkalimetallkations das Wasser eines natürlichen oder künstlichen Sees mit einer ausreichend hohen Konzentration an Alkali- oder Erdalkalimetallionen, z. B. eines Baggersees oder Tagebausees, eingesetzt wird, wobei die lonenkonzentration ausreicht, um einen pH des Wassers von zumindest 7,5 zu bewirken, und gegebenenfalls durch Basenzusatz voreingestellt wird.

3. Verfahren nach Anspruch 1 oder 2, **dadurch gekennzeichnet, dass** in Schritt a) die wässrige Lösung des zumindest eines Alkali- oder Erdalkalimetallkations in einem Sprühwäscher oder Sprühturm (01) mit der Umgebungsluft in Kontakt gebracht wird.

4. Verfahren nach einem der Ansprüche 1 bis 3, **dadurch gekennzeichnet, dass** in Schritt b) für einwertige Anionen selektive lonentauschermembranen in Kombination mit den bipolaren lonentauschermembranen eingesetzt werden und eine an Hydrogencarbonationen angereicherte und eine daran abgereicherte Lösung (205; 105), erhalten werden.

5. Verfahren nach einem der Ansprüche 1 bis 4, **dadurch gekennzeichnet, dass** das Dampfstrippen in Schritt c) in einer Füllkörperkolonne (26), gegebenenfalls bei Unterdruck, durchgeführt wird.

6. Verfahren nach einem der Ansprüche 1 bis 5, **dadurch gekennzeichnet, dass** die in Schritt b) erhaltene, an (Hydrogen-)Carbonat-Ionen angereicherte, relativ kalte Lösung (205), vor dem Dampfstrippen einem Wärmeaustausch (21; 22) mit
i) der bereits Dampfstrippen unterzogenen, relativ heißen Lösung (217) vor deren Rezyklierung zu Schritt b) unterzogen wird, um die erstere Lösung zu erwärmen und die zweitere Lösung abzukühlen; und/oder
ii) dem beim Dampfstrippen erhaltenen Kohlendioxid-Wasserdampf-Gemisch (231) unterzogen wird, um sie zu erwärmen und das Kohlendioxid-Wasserdampf-Gemisch zur Kondensation des Wasserdampfs abzukühlen.

7. Verfahren nach einem der Ansprüche 1 bis 6, **dadurch gekennzeichnet, dass** das beim Abkühlen des Kohlendioxid-Wasserdampf-Gemischs erhaltene Kondensat (238) zu Schritt b) rezykliert wird (239) und/oder zu Schritt c) rezykliert und daraus erneut Wasserdampf für das Dampfstrippen erzeugt wird.

8. Verfahren nach einem der Ansprüche 1 bis 7, **dadurch gekennzeichnet, dass**
i) zur Erzeugung des Wasserdampfs in Schritt c) und/oder zum Erwärmen der in Schritt b) erhaltenen, an (Hydrogen-)Carbonat-Ionen angereicherten Lösung (205) vor dem Dampfstrippen in Schritt c) die Abwärme eines Kraftwerks oder einer Fabrik (218) eingesetzt wird; und/oder
ii) für die Elektrodialyse (05) in Schritt b) Gleichstrom aus erneuerbaren Energiequellen eingesetzt wird.

9. Anlage zur kontinuierlichen Durchführung eines Verfahrens zum Abtrennen und Gewinnen von Kohlendioxid aus der Umgebungsluft nach einem der Ansprüche 1 bis 8, umfassend die folgenden, miteinander über entsprechende Verbindungsleitungen in Fluidkommunikation stehenden Vorrichtungen bzw. Teilabschnitte der Anlage:
a) einen Absorber (01) oder Zu- und Ableitungen (109; 106) von bzw. zu einem stehenden Gewässer zum In-Kontakt-Bringen von Umgebungsluft mit einer wässrigen Lösung zumindest eines Alkali- oder Erdalkalimetallkations zur Absorption des Kohlendioxids in die Lösung unter Bildung des Hydrogencarbonats bzw. Carbonats des zumindest einen Metalls;
b) einen eine Kombination aus bipolaren lonentauschermembranen und für ein- oder mehrwertige Anionen selektiven lonentauschermembranen (A, AK) umfassenden Elektrodialyse-Separator (05) zur Durchführung eines Ionenaustauschs zum Erhalt einer an (Hydrogen-)Carbonat-lonen angereicherten und einer daran abgereicherten Lösung (205; 105) sowie eine Leitung (105, 106) zum Rezyklieren der an (Hydrogen-)Carbonat-lonen abgereicherten Lösung (105) zu a);
c) eine Desorptionskolonne (26) zur Durchführung von Dampfstrippen der an (Hydrogen-)Carbonat-Ionen angereicherten Lösung (205) zum Erhalt eines Kohlendioxid-Wasserdampf-Gemischs (231) und einer an CO₂ abgereicherten Lösung (215), sowie eine Leitung (217, 201, 203, 204) zum Rezyklieren der an CO₂ abgereicherten Lösung (215) zu b) und Mittel (14) zum Einstellen eines alkalischen pH-Werts am Auslass der Elektrodialyse darin; und
d) einen Kondensator (31) zur Abtrennung von Wasser aus dem erhaltenen Kohlendioxid-Wasserdampf-Gemisch (231) durch Kondensation und gegebenenfalls einen Trockner für das Kohlendioxid.

10. Anlage nach Anspruch 9, **dadurch gekennzeichnet, dass** der Absorber (01) ein Sprühwäscher ist.

11. Anlage nach Anspruch 9 oder 10, **dadurch gekennzeichnet, dass** zwischen dem Elektrodialyse-Separator (05) und der Desorptionskolonne (26) eine Heizeinrichtung (21) zum Erwärmen der an (Hydrogen-)Carbonat-Ionen angereicherten Lösung vor dem Dampfstrippen vorgesehen ist.

12. Anlage nach einem der Ansprüche 9 bis 11, **dadurch gekennzeichnet, dass** die Desorptionskolonne (26) zum Einleiten von Wasserdampf mit einem Verdampfer (27) verbunden ist und/oder mit einer Vakuumpumpe (33) verbunden ist, um darin einen Unterdruck zu erzeugen.

13. Anlage nach einem der Ansprüche 9 bis 12, **dadurch gekennzeichnet, dass** die Heizeinrichtung (21) ein Wärmetauscher ist, um die im Elektrodialyse-Separator (05) an (Hydrogen-)Carbonat-lonen angereicherte, relativ kalte Lösung (205) vor dem Dampfstrippen einem Wärmeaustausch (21; 22) mit
i) der bereits Dampfstrippen unterzogenen, relativ heißen Lösung (217) vor deren Rezyklierung zum Elektrodialyse-Separator (05) zu unterziehen, um die erstere Lösung (205) zu erwärmen und die zweitere Lösung (217) abzukühlen; und/oder
ii) dem beim Dampfstrippen erhaltenen Kohlendioxid-Wasserdampf-Gemisch (231) zu unterziehen, um sie zu erwärmen und das Kohlendioxid-Wasserdampf-Gemisch (231) zur Kondensation des Wasserdampfs abzukühlen.

14. Anlage nach einem der Ansprüche 9 bis 13, **dadurch gekennzeichnet, dass** der Kondensator (31) zum Rezyklieren des beim Abkühlen des Kohlendioxid-Wasserdampf-Gemischs erhaltenen Kondensats (238)
i) über eine Leitung (239, 201, 203, 204) mit dem Elektrodialyse-Separator (05) verbunden ist; und/oder
ii) über eine Leitung mit dem Verdampfer (27) verbunden ist, um aus dem Kondensat erneut Wasserdampf zu erzeugen.

## Claims

1. A method for separating and recovering carbon dioxide from ambient air, comprising continuous implementation of the following steps:
a) contacting ambient air with an aqueous solution (01) of at least one alkali or alkaline earth metal cation for absorbing carbon dioxide into the solution while forming a hydrogen carbonate or carbonate of the at least one metal;
b) electrodialysis (05) of the solution (109, 104) obtained thereby using a combination of bipolar ion exchange membranes and ion exchange membranes selective for mono- or polyvalent anions (A, AK) for obtaining a solution enriched in (hydrogen) carbonate ions and one depleted thereof (205; 105), wherein the solution depleted of (hydrogen) carbonate ions (105) is recycled to step a);
c) thermal desorption (26) of the carbon dioxide from the solution enriched in (hydrogen) carbonate ions (205) obtained in step (b) by means of steam stripping for obtaining a carbon dioxide/water vapor mixture (231) and a solution depleted of CO₂ (215) being recycled to step b), wherein an alkaline pH is set at the exit of the electrodialysis; and
d) separating water (31) from the carbon dioxide/water vapor mixture (231) obtained by means of cooling to condensate the water vapor and optionally further drying the carbon dioxide.

2. The method according to claim 1 **characterized in that** in step a), water form a natural or artificial lake with a sufficiently high concentration of alkali or alkaline earth metal ions, e.g., a quarry pond or a mining lake, is used as solution of the at least one alkali or alkaline earth metal cation, wherein the ion concentration is sufficient to result in a pH of the water of at least 7.5 and is optionally pre-set by adding a base.

3. The method according to claim 1 or 2 **characterized in that** in step a), the aqueous solution of the at least one alkali or alkaline earth metal cation is contacted with ambient air in a spray washer or spray tower (01).

4. The method according to any of the claims 1 to 3 **characterized in that** in step b), selective ion exchange membranes in combination with the bipolar ion exchange membranes are used for monovalent anions, and a solution enriched in hydrogen carbonate ions and one depleted thereof (205; 105) are obtained.

5. The method according to any of the claims 1 to 4 **characterized in that** vapor stripping in step c) is conducted in a packed column (26), optionally at negative pressure.

6. The method according to any of the claims 1 to 5 **characterized in that** the relatively cold solution (205) enriched in (hydrogen) carbonate ions obtained in step b) is, before vapor stripping, subjected to heat exchange (21; 22) with
i) a relatively hot solution (217) previously subjected to vapor stripping before it is recycled to step b), in order to heat the first solution and to cool the second solution; and/or
ii) the carbon dioxide/water vapor mixture (231) obtained during vapor stripping in order to heat it and to cool the carbon dioxide/water vapor mixture for condensating the water vapor.

7. The method according to any of the claims 1 to 6 **characterized in that** the condensate (238) obtained during cooling of the carbon dioxide/water vapor mixture is recycled to step b) (239) and/or to step c) and again water vapor is generated therefrom for vapor stripping.

8. The method according to any of the claims 1 to 7 **characterized in that**
i) for generating water vapor in step c) and/or for heating the solution enriched in (hydrogen) carbonate ions (205) obtained in step b) before vapor stripping in step c), waste heat from a power plant or a factory (218) is used; and/or
ii) for electrodialysis (05) in step b), direct currents from renewable energy sources are used.

9. A plant for the continuous implementation of a method for separating and recovering carbon dioxide from ambient air according to any of the claims 1 to 8 comprising the following devices or sections of the plant that are in fluid communication with each other via corresponding connecting lines:
a) an absorber (01) or inlet and outlet lines (109; 106) from or to a standing water body for contacting ambient air with an aqueous solution of at least one alkali or alkaline earth metal cation for absorbing carbon dioxide into the solution while forming a hydrogen carbonate or carbonate of the at least one metal;
b) an electrodialysis separator (05) comprising a combination of bipolar ion exchange membranes and ion exchange membranes selective for mono- or polyvalent anions (A, AK) for conducting ion exchange and obtaining a solution enriched in (hydrogen) carbonate ions and one depleted thereof (205; 105), as well as a line (105, 106) for recycling the solution depleted of (hydrogen) carbonate ions (105) to a);
c) a desorption column (26) for conducting vapor stripping with the solution enriched in (hydrogen) carbonate ions (205) for obtaining a carbon dioxide/water vapor mixture (231) and a solution depleted of CO₂ (215), as well as a line (217, 201, 203, 204) for recycling the solution depleted of CO₂ (215) to b) and means (14) for setting the alkaline pH value at the exit of the electrodialysis; and
d) a capacitor (31) for separating water from the carbon dioxide/water vapor mixture (231) obtained by means of condensation and optionally a dryer for the carbon dioxide.

10. The plant according to claim 9 **characterized in that** the absorber (01) is a spray washer.

11. The plant according to claim 9 or 10 **characterized in that** between the electrodialysis separator (05) and the desorption column (26), a heating device (21) for heating the solution enriched in (hydrogen) carbonate ions before vapor stripping is provided.

12. The plant according to any of the claims 9 to 11 **characterized in that** the desorption column (26) for introducing water vapor is connected to an evaporator (27) and/or with a vacuum pump (33) to produce negative pressure therein.

13. The plant according to any of the claims 9 to 12 **characterized in that** the heating device (21) is a heat exchanger to subject the relatively cold solution enriched in (hydrogen) carbonate ions (205) in the electrodialysis separator (05) to heat exchange (21; 22) before vapor stripping with
i) the relatively hot solution (217) previously subjected to vapor stripping before it is recycled to the electrodialysis separator (05) in order to heat the first solution (205) and to cool the second solution (217); and/or
ii) the carbon dioxide/water vapor mixture (231) obtained during vapor stripping in order to heat it and to cool the carbon dioxide/water vapor mixture (231) for condensating the water vapor.

14. The plant according to any of the claims 9 to 13 **characterized in that** after recycling the condensate (238) obtained during cooling of the carbon dioxide/water vapor mixture, the capacitor (31) is
i) connected to the electrodialysis separator (05) via a line (239, 201, 203, 204); and/or
ii) is connected to the evaporator (27) via a line in order to again generate water vapor from the condensate.

## Revendications

1. Procédé de séparation et récupération du dioxyde de carbone de l'air ambiant, comprenant l'exécution continue des étapes suivantes :
a) mise en contact de l'air ambiant avec une solution aqueuse (01) d'au moins un cation de métal alcalin ou alcalinoterreux afin de faire absorber le dioxyde de carbone par la solution avec formation d'un hydrogénocarbonate ou carbonate de l'au moins un métal ;
b) électrodialyse (05) de la solution ainsi obtenue (109, 104) par l'utilisation d'une combinaison de membranes bipolaires échangeuses de ions et membranes échangeuses de ions sélectives pour anions mono- ou polyvalents (A, AK), afin d'obtenir une solution enrichie et une solution appauvrie en ions d'(hydrogéno)carbonate (205 ; 105), la solution appauvrie en ions d'(hydrogéno)carbonate (105) étant recyclée dans l'étape a) ;
c) désorption thermique (26) du dioxyde de carbone à partir de la solution enrichie en ions d'(hydrogéno)carbonate (205), obtenue dans l'étape b), par stripping à la vapeur, afin d'obtenir un mélange de dioxyde de carbone et vapeur d'eau (231) et une solution appauvrie en CO₂ (215) qui est recyclée dans l'étape b), un pH alcalin étant réglé à la sortie de l'électrodialyse ;
d) séparation par refroidissement de l'eau (31) du mélange de dioxyde de carbone et vapeur d'eau (231) obtenu, afin de faire condenser la vapeur d'eau, et éventuellement séchage ultérieur du dioxyde de carbone.

2. Procédé selon la revendication 1, **caractérisé en ce que**, dans l'étape a), comme solution de l'au moins un cation de métal alcalin ou alcalinoterreux est utilisée de l'eau d'un lac naturel ou artificiel, par exemple une gravière ou une mine à ciel ouvert inondée, ayant une concentration en ions de métal alcalin ou alcalino-terreux suffisamment forte, la concentration en ions étant suffisante à donner une valeur pH de l'eau d'au moins 7,5 et étant éventuellement préréglée par l'addition d'une base.

3. Procédé selon les revendications 1 ou 2, **caractérisé en ce que** dans l'étape a) la solution aqueuse de l'au moins un cation de métal alcalin ou alcalinoterreux est mise en contact avec l'air ambiant dans une tour de lavage (01).

4. Procédé selon l'une quelconque parmi les revendications 1 à 3, **caractérisé en ce que** pour les anions monovalents dans l'étape b) sont employées des membranes échangeuses de ions sélectives en combinaison avec les membranes échangeuses de ions bipolaires, et **en ce qu'**une solution enrichie et une solution appauvrie en ions hydrogénocarbonate (205 ; 105) sont obtenues.

5. Procédé selon l'une quelconque parmi les revendications 1 à 4, **caractérisé en ce que** le stripping à la vapeur de l'étape c) est effectué dans une colonne à garnissage (26), éventuellement en pression négative.

6. Procédé selon l'une quelconque parmi les revendications 1 à 5, **caractérisé en ce que** la solution relativement froide, enrichie en ions d'(hydrogéno)carbonate (205), obtenue dans l'étape b), est soumise, avant le stripping à la vapeur, à un échange de chaleur (21 ; 22) avec :
i) la solution relativement chaude (217), déjà soumise au stripping à la vapeur avant son recyclage dans l'étape b), afin de réchauffer la première solution et refroidir la deuxième; et/ou
ii) le mélange de dioxyde de carbone et vapeur d'eau (231) obtenu lors du stripping à la vapeur, afin de la réchauffer et de refroidir le mélange de dioxyde de carbone et vapeur d'eau (231) pour faire condenser la vapeur d'eau.

7. Procédé selon l'une quelconque parmi les revendications 1 à 6, **caractérisé en ce que** le condensat (238) obtenu lors du refroidissement du mélange de dioxyde de carbone et vapeur d'eau est recyclé dans l'étape b) (239) et/ou recyclé dans l'étape c), afin d'obtenir de nouveau de la vapeur d'eau pour le stripping à la vapeur,

8. Procédé selon l'une quelconque parmi les revendications 1 à 7, **caractérisé en ce que**
i) avant le stripping à la vapeur dans l'étape c) sont utilisés les rejets thermiques d'une centrale électrique ou d'une usine (218), afin de produire la vapeur d'eau dans l'étape c) et/ou afin de réchauffer la solution enrichie en ions d'(hydrogéno)carbonate (205), obtenue dans l'étape b) ; et/ou **en ce que**
ii) pour l'électrodialyse (05) dans l'étape b) est utilisé du courant continu provenant de sources d'énergie renouvelables.

9. Installation pour l'exécution continue d'un procédé de séparation et récupération du dioxyde de carbone de l'air ambiant selon l'une quelconque parmi les revendications 1 à 8, comportant des dispositifs ou sections de l'installation qui sont en communication fluidique entre eux/elles moyennant des tuyaux de raccordements correspondants, lesdits dispositifs ou sections étant les suivants :
a) un absorbeur (01) ou des conduits d'amenée et d'évacuation (109 ; 106) de/vers une eau stagnante pour la mise en contact de l'air ambiant avec une solution aqueuse d'au moins un cation de métal alcalin ou alcalinoterreux, afin de faire absorber le dioxyde de carbone par la solution avec formation d'un hydrogénocarbonate ou carbonate de l'au moins un métal ;
b) un séparateur électrodialytique (05) comprenant une combinaison de membranes bipolaires échangeuses de ions et membranes échangeuses de ions sélectives pour anions mono ou polyvalents (A, AK) pour effectuer un échange ionique et obtenir une solution enrichie et une solution appauvrie en ions d'(hydrogéno)carbonate (205 ; 105) ainsi qu'un conduit (105, 106) pour le recyclage de la solution appauvrie en ions d'(hydrogéno)carbonate (105) dans l'étape a) ;
c) une colonne de désorption (26) pour soumettre la solution enrichie en ions d'(hydrogéno)carbonate (205) au stripping à la vapeur, afin d'obtenir un mélange de dioxyde de carbone et vapeur d'eau (231) et une solution appauvrie en CO₂ (215), ainsi qu'un conduit (217, 201, 203, 204) pour le recyclage de la solution appauvrie en CO₂ (215) dans l'étape b) et des moyens (14) pour régler la valeur pH alcaline à la sortie de l'électrodialyse ; et
d) un condenseur (31) pour la séparation par condensation de l'eau du mélange de dioxyde de carbone et vapeur d'eau (231) obtenu, et éventuellement un sécheur pour le dioxyde de carbone.

10. Installation selon la revendication 9, **caractérisée en ce que** l'absorbeur (01) est une tour de lavage.

11. Installation selon l'une des revendications 9 ou 10, **caractérisée en ce qu'**un élément de chauffage (21) est prévu entre le séparateur électrodialytique (05) et la colonne de désorption (26), afin de réchauffer la solution enrichie en ions d'(hydro-géno)carbonate avant son stripping à la vapeur.

12. Installation selon l'une quelconque des revendications 9 à 11, **caractérisée en ce que** la colonne de désorption (26) est raccordée à un évaporateur (27) afin d'introduire la vapeur d'eau et/ou avec une pompe à vide (33) afin d'y créer une pression négative.

13. Installation selon une quelconque des revendications 9 à 12, **caractérisée en ce que** l'élément de chauffage (21) est un échangeur thermique pour la soumission, avant son stripping à la vapeur, de la solution relativement froide, enrichie en ions d'(hydro-géno)carbonate (205) dans le séparateur électrodialytique (05), à un échange de chaleur (21 ; 22) avec :
i) la solution relativement chaude, déjà soumise au stripping à la vapeur (217), avant son recyclage dans le séparateur électrodialytique (05), afin de réchauffer la première solution et refroidir la deuxième; et/ou
ii) le mélange de dioxyde de carbone et vapeur d'eau (231) obtenu lors du stripping à la vapeur, afin de la réchauffer et de refroidir le mélange de dioxyde de carbone et vapeur d'eau (231) pour faire condenser la vapeur d'eau.

14. Installation selon Installation selon une quelconque des revendications 9 à 13, **caractérisée en ce que** le condenseur (31) est raccordé :
i) au séparateur électrodialytique (05) moyennant un conduit (239, 201, 203, 204) ; et/ou
ii) à l'évaporateur (27), afin de produire de nouveau de la vapeur d'eau à partir du condensat,
pour recycler le condensat (238) obtenu par le refroidissement du mélange de dioxyde de carbone et vapeur d'eau.
